Europäisches Patentamt

**European Patent Office**

**Office européen des brevets**

(11) Numéro de publication: **0 192 187**
**A1**

(12) ## DEMANDE DE BREVET EUROPEEN

(21) Numéro de dépôt: **86101802.6**

(22) Date de dépôt: **13.02.86**

(51) Int. Cl.⁴: **G 01 S 3/42**
**G 01 S 3/18, G 01 S 3/56**

(30) Priorité: **15.02.85 FR 8502210**

(43) Date de publication de la demande:
**27.08.86 Bulletin 86/35**

(84) Etats contractants désignés:
**DE FR GB IT NL SE**

(71) Demandeur: **ALCATEL THOMSON ESPACE**
**11, rue Dubonnet**
**F-92407 Courbevoie(FR)**

(72) Inventeur: **Lenormand, Régis**
**7bis Rue Pargaminière**
**F-31000 Toulouse(FR)**

(72) Inventeur: **Morin, Dominique**
**89, Chemin des Brioudes**
**F-31600 Muret(FR)**

(72) Inventeur: **Vidal Saint-Andre, Bruno**
**82, Rue Alfred Dumeril**
**F-31400 Toulouse(FR)**

(74) Mandataire: **Weinmiller, Jürgen et al,**
**Zeppelinstrasse 63**
**D-8000 München 80(DE)**

(54) **Dispositif de pointage d'antenne.**

(57) Dispositif de pointage d'antenne, en particulier d'antenne embarquée sur un satellite.

Il comporte, répartis autour de la source principale (1), quatre cornets auxiliaires (2, 3, 4, 5) recevant des signaux de mesure de dépointage. Il comporte en outre un commutateur (10) desdits signaux de dépointage, sortant sur un coupleur hybride (16) qui reçoit également le signal en provenance de l'antenne (1). La sortie de ce coupleur alimente le récepteur (18), qui comporte par ailleurs un bloc (19) de calcul et de correction du dépointage de l'antenne (1).

FIG.2

EP 0 192 187 A1

Dispositif de pointage d'antenne

La présente invention se rapporte à un dispositif de pointage d'antenne, par exemple de pointage d'une antenne embarquée sur un satellite.

On connaît, en matière de dispositif de pointage d'une antenne, des dispositifs entrant dans le cadre général de ce que l'on convient d'appeler l'écartométrie, ce genre de dispositif étant d'ailleurs utilisé classiquement pour le maintien à poste d'un satellite géostationnaire. Un tel dispositif connu comporte plusieurs capteurs auxiliaires de signaux radioélectriques, tels que des cornets récepteurs. Ces capteurs, en général au nombre de quatre, sont extérieurs à la source principale de l'antenne et sont régulièrement disposés à la périphérie de celle-ci.

Chaque couple de capteurs diamétralement opposés est connecté à un Té magique. Les signaux obtenus sur chacune des voies-différence de chacun des deux Tés magiques sont alors dirigés vers un récepteur spécial d'écartométrie qui, après détection des signaux reçus, élabore un signal de correction qui est transmis à un dispositif électromécanique de pointage de l'antenne.

Il est peu souhaitable d'utiliser ce genre de dispositif connu pour effectuer le pointage d'une antenne embarquée sur un satellite car il nécessite l'utilisation d'un récepteur spécial d'écartométrie, c'est-à-dire un matériel supplémentaire, ce qui est dommageable en ce qui concerne le coût et le poids du satellite.

L'invention se rapporte à un dispositif de pointage d'antenne, ledit dispositif comportant plusieurs capteurs auxiliaires de signaux radio-électriques de mesure de pointage, lesdits capteurs étant extérieurs à la source principale de l'antenne,
caractérisé en ce que les sorties desdits capteurs sont respectivement connectées à une des entrées multiples d'un dispositif électronique de commutation de signaux radio-électriques sur une même sortie, en ce que ladite sortie dudit dispositif électronique de commutation est connectée à une des deux entrées d'un coupleur, l'autre entrée dudit coupleur recevant directement le signal radio-électrique en provenance de la source principale de l'antenne, et en ce que la sortie dudit coupleur, représentant la somme instantanée du champ reçu par la source principale et du champ reçu par respectivement et successivement chacun desdits capteurs, est connectée au récepteur de signaux relatif à ladite antenne, ledit récepteur comportant et/ou étant associé à un bloc de calcul et de correction du dépointage de l'antenne à partir de la comparaison des signaux reçus successivement au cours de chaque cycle de commutation et comportant chacun un signal de mesure de pointage.

L'invention sera mieux comprise à partir de la description suivante d'un exemple de réalisation, en référence aux dessins annexés, dans lesquels :

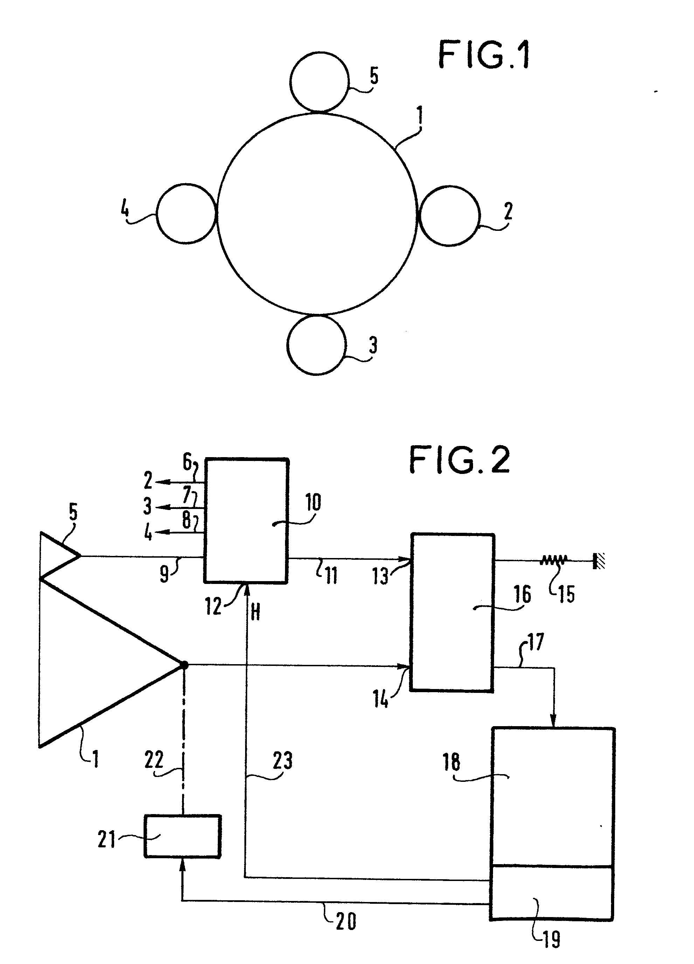

- la figure 1 est une vue de face schématique de la source principale de l'antenne équipant le dispositif de l'invention, équipée de capteurs auxiliaires de mesure de pointage,

- la ligne 2 est une représentation schématique du dispositif de pointage de l'invention.

En se reportant à l'ensemble des figures 1 et 2, l'antenne de poursuite de satellites comporte une source principale 1 entourée, sur sa périphérie extérieure, de quatre cornets récepteurs 2, 3, 4 et 5.

Conformément à l'invention, les signaux radio-électriques reçus par chacun des cornets périphériques 2, 3, 4 et 5, sont dirigés vers les quatre entrées 6, 7, 8 et 9, d'un commutateur 10 de signaux radio-électriques à une seule sortie 11 constitué, par exemple, par une matrice de commutation à diodes classiques. Le commutateur 10 reçoit par ailleurs, sur une entrée 12, un signal d'horloge H de commande de commutation.

La sortie 11 du commutateur 10 est connectée à une des deux entrées 13 d'un coupleur hybride 16 dont l'autre entrée 14 reçoit le signal radio-électrique en provenance de la source principale 1. Comme on le voit sur le dessin, ce coupleur a classiquement une de ses deux sorties connectée à la masse par une résistance d'adaptation 15. L'autre sortie 17 du coupleur hybride 16, qui constitue donc sa sortie effective de signaux radio-électrique additionnés, est connectée au récepteur 18 qui est le récepteur de signaux radio-électriques en provenance de l'antenne.

Conformément à l'invention, le récepteur 18 comporte un bloc de calcul et de correction 19 qui compare les signaux démodulés reçus successivement au cours de chaque cycle de commutation, en déduit la valeur du dépointage et, par suite, celle de la correction à effectuer, et transmet cette indication, par une sortie 20, à un dispositif 21 électromécanique de correction du dépointage de l'antenne, relié mécaniquement à la source principale 1. Le dispositif 21, très classique en soi, comprend essentiellement un amplificateur de signaux électriques et un moteur pas-à-pas relié à l'antenne 1 par une liaison mécanique 22.

Le bloc de calcul 19 fournit également, par une liaison 23, le signal d'horloge H nécessaire au fonctionnement du commutateur électronique 10.

Le cycle de commutation se déroule comme suit :

Le commutateur 10 est activé sur l'entrée 6. La sommation du niveau reçu sur le cornet périphérique 2 avec le niveau reçu sur le cornet principal 1 s'effectue par l'intermédiaire du coupleur hydride 16.

Le niveau $N_2$ fourni par le récepteur 18 est mis en mémoire dans le bloc 19.

Le commutateur 10 est activé sur l'entrée 8. La sommation du niveau reçu sur le cornet périphérique 4 avec le niveau reçu sur le cornet principal 1 s'effectue par l'intermédiaire du coupleur hydride 16.

Le niveau $N_4$ fourni par le récepteur 18 est mis en mémoire dans le bloc 19.

La comparaison entre les niveaux $N_2$ et $N_4$ s'effectue dans le bloc 19 et cette différence entre les niveaux est convertie en dépointage angulaire par le bloc 19.

Une correction de pointage suivant l'axe représenté par les cornets périphériques 2 et 4 est réalisée par l'intermédiaire du système électromécanique 21.

Le commutateur 10 est activé sur l'entrée 7. La sommation du niveau reçu par le cornet périphérique 3 avec le niveau reçu sur le cornet principal 1 s'effectue par l'intermédiaire du coupleur hybride 16.

Le niveau $N_3$ fourni par le récepteur 18 est mis en mémoire dans le bloc 19.

Le commutateur 10 est activé sur l'entrée 9. La sommation du niveau reçu sur le cornet périphérique 5 avec le niveau reçu sur le cornet principal 1 s'effectue par l'intermédiaire du coupleur hybride 16.

Le niveau $N_5$ fourni par le récepteur 18 est mis en mémoire dans le bloc 19.

La comparaison entre les niveaux $N_3$ et $N_5$ s'effectue dans le bloc 19 et cette différence entre les niveaux est convertie en dépointage angulaire par le bloc 19.

Une correction de pointage suivant l'axe représenté par les cornets périphériques 3 et 5 est réalisée par l'intermédiaire du système électromécanique 21.

Le cycle est alors terminé.

Le dispositif qui vient d'être décrit est spécialement bien adapté pour du matériel embarqué sur satellite. Il pourrait, bien évidemment, être également utilisé pour du matériel à terre.

REVENDICATIONS

1/ Dispositif de pointage d'antenne, ledit dispositif comportant plusieurs capteurs auxiliaires de signaux radio-électriques de mesure de pointage, lesdits capteurs étant extérieurs à la source principale de l'antenne, dans lequel les sorties desdits capteurs sont respectivement connectées à une des entrées multiples d'un dispositif électronique de commutation de signaux radio-électriques sur une même sortie, en ce que ladite sortie dudit dispositif électronique de commutation est connectée à une des deux entrées d'un coupleur, l'autre entrée dudit coupleur recevant directement le signal radio-électrique en provenance de la source principale de l'antenne, et en ce que la sortie dudit coupleur, représentant la somme instantanée du champ reçu par la source principale et du champ reçu par respectivement et successivement chacun desdits capteurs, est connectée au récepteur de signaux relatif à ladite antenne, ledit récepteur comportant et/ou étant associé à un bloc de calcul et de correction du dépointage de l'antenne à partir de la comparaison des signaux reçus successivement au cours de chaque cycle de commutation et comportant chacun un signal de mesure de pointage.

2/ Dispositif de pointage d'antenne selon la revendication 1, comportant plusieurs capteurs de signaux radio-électriques, tels que des cornets récepteurs régulièrement répartis sur la périphérie extérieure de la source principale de l'antenne, et dont les sorties sont respectivement connectées aux entrées correspondantes du dispositif électronique de commutation de signaux à plusieurs entrées et une seule sortie, ledit dispositif de commutation recevant par ailleurs un signal de commande de commutation en provenance dudit bloc de calcul.

**FIG.1**

**FIG.2**

Office européen
des brevets

**RAPPORT DE RECHERCHE EUROPEENNE**

**0192187**
Numero de la demande

EP  86 10 1802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | FR-A-2 523 375  (AGENCE SPATIALE EUROPEENNE) <br> * Page 1, lignes 19-31; page 2, ligne 24 - page 3, ligne 6; page 9, lignes 8-29; page 12, ligne 12 - page 14, ligne 1; figures 1-3 * | 1,2 | G 01 S  3/42 <br> G 01 S  3/18 <br> G 01 S  3/56 |
| A | FR-A-1 243 314  (COMPAGNIE FRANCAISE THOMSON-HOUSTON) <br> * En entier * | 1,2 | |
| A | US-A-3 324 472  (V.C. SUNDBERG) <br> * Colonne 4, lignes 25-36; figure 4 * | 1,2 | |
| E | WO-A-8 600 998  (SELENIA SPAZIO) <br> * Page 6, ligne 20 - page 7, ligne 11; page 8, ligne 27 - page 9, ligne 26; figures 4a,4b * | 1,2 | DOMAINES TECHNIQUES RECHERCHES (Int Cl.4) <br><br> G 01 S |

Le présent rapport de recherche a été établi pour toutes les revendications

| Lieu de la recherche | Date d'achèvement de la recherche | Examinateur |
|---|---|---|
| LA HAYE | 27-05-1986 | MARCHAU M.F. |